# EUROPÄISCHE PATENTANMELDUNG

(11) **EP 4 566 440 A1**
(43) Veröffentlichungstag der Anmeldung: **11.06.2025**
(21) Anmeldenummer: 23214144.0
(22) Anmeldetag: 05.12.2023
(51) Int. Cl.: A01D 78/10

(54) **GEZOGENER SEITENSCHWADER**

(71) Anmelder: Kverneland Group Kerteminde AS, 5300 Kerteminde (DK)
(72) Erfinder: SALZER, Henning, 78345 Moos (DE); GOHL, Stefan, 78244 Gottmadingen (DE)
(74) Vertreter: Grünecker Patent- und Rechtsanwälte PartG mbB

(57) **Zusammenfassung**

Beschrieben wird ein gezogener Seitenschwader, insbesondere Zweikreisel-Seitenschwader. Demnach umfasst dieser eine vordere Kreiseleinheit mit einer Zugdeichsel und mit einer an dieser angelenkten und starr an einen Schlepper koppelbaren Anhängevorrichtung, eine hintere Kreiseleinheit, einen an die vordere und hintere Kreiseleinheit angelenkten Längsträger, einen hydraulischen Hauptlenkzylinder mit einem ersten Stellbereich und einen hydraulischen Zusatzlenkzylinder mit einem zweiten Stellbereich, der parallel zum ersten Stellbereich verläuft, wobei der Hauptlenkzylinder und der Zusatzlenkzylinder zum Einstellen eines Anlenkwinkels zwischen dem Längsträger und dem Fahrwerk der hinteren Kreiseleinheit angeordnet sind, und einen Geberzylinder zum Betätigen des Zusatzlenkzylinders. Der Geberzylinder ist entweder an der Zugdeichsel einerseits und an der Anhängevorrichtung andererseits derart angelenkt, dass der Geberzylinder durch Veränderung eines zwischen der Anhängevorrichtung und der Zugdeichsel gebildeten Nachlaufwinkels ein-/ausgefahren wird, oder der Geberzylinder ist an einer Kreiselaufnahme der vorderen Kreiseleinheit einerseits und am Längsträger andererseits derart angelenkt, dass der Geberzylinder durch Veränderung eines zwischen der vorderen Kreiselaufnahme und dem Längsträger gebildeten Nachlaufwinkels ein-/ ausgefahren wird. Die Anordnung des Geberzylinders ermöglicht eine konstruktive einfache und gegebenenfalls nachrüstbare Spurkorrektur der hinteren Kreiseleinheit bei Kurvenfahrten zum Zwecke einer Überlappungsoptimierung.

## Beschreibung

Die Erfindung betrifft einen gezogenen Seitenschwader, insbesondere einen Zweikreisel-Seitenschwader.

Ein gezogener Zweikreisel-Seitenschwader ist beispielsweise aus der DE 102 05 499 A1 bekannt. Demnach umfasst dieser eine vordere Kreiseleinheit mit einer Zugdeichsel und einer an dieser angelenkten und mit einem Schlepper verbundenen Anhängevorrichtung, eine hintere Kreiseleinheit und einen an die vordere und hintere Kreiseleinheit frei schwenkbar angelenkten Längsträger. Ist die hintere Kreiseleinheit im Arbeitsbetrieb in Fahrtrichtung gesehen bezüglich der vorderen Kreiseleinheit nach links versetzt, wird ein Schwad von der vorderen Kreiseleinheit an die hintere Kreiseleinheit übergeben und von dieser seitlich abgelegt. Der seitliche Versatz der hinteren Kreiseleinheit wird mit einem hydraulischen Lenkzylinder eingestellt und kann bei Linkskurven durch einen zusätzlichen Lenkzylinder korrigiert werden, um den Schwad möglichst vollständig von der vorderen an die hintere Kreiseleinheit zu übergeben. Diese Korrektur wird durch eine Steuervorrichtung eingestellt, die im Bereich der ersten Kreiseleinheit angeordnet ist und beispielsweise in Abhängigkeit von einem zwischen dieser und dem daran angelenkten Längsträger einen Steuerzapfen und eine Schaltkulisse relativ zu einander bewegt, wodurch dann beispielsweise ein dem zusätzlichen Lenkzylinder zugeordneter Geberzylinder betätigt wird.

Nachteilig ist jedoch, dass ein derartiger Steuermechanismus im Bereich der ersten Kreiseleinheit vergleichsweise aufwändig und schwierig zu platzieren ist. Somit muss hierfür gegebenenfalls die Konstruktion der ersten Kreiseleinheit und des zugeordneten Längsträgers grundlegend verändert werden, was beispielsweise ein Nachrüsten von Zweikreisel-Seitenschwadern mit einer solchen Korrekturfunktion erschwert oder gar unmöglich macht.

Es besteht somit Bedarf für demgegenüber verbesserte gezogene Seitenschwader, insbesondere von solchen mit zwei Kreiseleinheiten.

Die gestellte Aufgabe wird mit einem gezogenen Seitenschwader gemäß Anspruch 1 gelöst. Bevorzugte Ausführungsformen sind unter anderem in den abhängigen Ansprüchen angegeben.

Demnach handelt es sich bei dem gezogenen Seitenschwader insbesondere um einen Zweikreisel-Seitenschwader. Der Seitenschwader umfasst: eine vordere Kreiseleinheit mit einer Zugdeichsel und einer an dieser angelenkten und an einen Schlepper koppelbaren Anhängevorrichtung; eine hintere Kreiseleinheit; einen einerseits an die vordere und andererseits an die hintere Kreiseleinheit angelenkten Längsträger; und einen hydraulischen Hauptlenkzylinder mit einem ersten Stellbereich sowie einen hydraulischen Zusatzlenkzylinder mit einem zweiten Stellbereich, der parallel zum ersten Stellbereich verläuft. Der Hauptlenkzylinder und der Zusatzlenkzylinder sind zum Einstellen eines Anlenkwinkels zwischen dem Längsträger und dem Fahrwerk der hinteren Kreiseleinheit angeordnet. Femer umfasst der Seitenschwader einen Geberzylinder zum Betätigen des Zusatzlenkzylinders.

Der Geberzylinder ist entweder gemäß einer ersten Anordnungsvariante an der Zugdeichsel einerseits und an der Anhängevorrichtung andererseits derart angelenkt, dass der Geberzylinder durch Veränderung eines zwischen der Anhängevorrichtung und der Zugdeichsel gebildeten Nachlaufwinkels entweder eingefahren oder ausgefahren wird.

Oder der Geberzylinder ist gemäß einer zweiten Anordnungsvariante an der Kreiselaufnahme der vorderen Kreiseleinheit einerseits und am Längsträger andererseits derart angelenkt, dass der Geberzylinder durch Veränderung eines zwischen der vorderen Kreiselaufnahme und dem Längsträger gebildeten Nachlaufwinkels ein-/ ausgefahren wird.

Die beiden Lagerpunkte des Geberzylinders sind dann jeweils ortsfest bezüglich der genannten Strukturen.

Der Geberzylinder lässt sich sowohl im Bereich der Zugdeichsel und der Anhängevorrichtung als auch im Bereich der vorderen Kreiselaufnahme und des Längsträgers mit vergleichsweise geringem konstruktiven Aufwand anordnen und gegebenenfalls auch nachrüsten.

Die parallel zueinander ausgerichteten Stellbereiche des Hauptlenkzylinders und des Zusatzlenkzylinders ermöglichen zudem deren Anordnung im Bereich des Längsträgers und der zweiten Kreiseleinheit mit vergleichsweise geringem konstruktiven Aufwand, gegebenenfalls auch im Zuge einer Nachrüstung, indem beispielsweise ein vorhandener herkömmlicher Lenkzylinder durch den Hauptlenkzylinder und den Zusatzlenkzylinder ersetzt wird.

Die hydraulische Steuerung des Hauptlenkzylinders ist weiterhin auf prinzipiell bekannte Weise schlepperseitig möglich und daher hier nicht weiter beschrieben. Somit lässt sich eine spurkorrigierende Überlappungssteuerung der hinteren Kreiseleinheit mit relativ geringem technischen Aufwand in den Seitenschwader integrieren.

Unter "Anlenken" bzw. "angelenkt" ist hier stets eine schwenkbare und kraftkoppelnde Verbindung zu verstehen, beispielsweise zum Übertragen von Zugkräften für die Fortbewegung des Seitenschwaders und/oder von Zugkräften oder Schubkräften zum Übertragen von Stellbewegungen.

Vorzugsweise ist die Anhängevorrichtung eine bezüglich Zugrichtung des Schleppers quer an diesen ankoppelbare Anhängeschiene, an welche die Zugdeichsel zentral, insbesondere mittig, und der Geberzylinder diesbezüglich seitlich, insbesondere in Fahrrichtung nach links versetzt, angelenkt sind. Eine solche Anhängeschiene lässt sich bekanntermaßen auf standardisierte Weise an die Unterlenker einer Dreipunktbefestigung eines Schleppers koppeln. Ein seitlicher Versatz des Geberzylinders an der Anhängeschiene nach links ist besonders vorteilhaft für eine Spurkorrektur der hinteren Kreiseleinheit bei den in Arbeitsstellung üblichen Linkskurven und bei gleichzeitigem Linksversatz der hinteren Kreiseleinheit bezüglich der vorderen Kreiseleinheit.

Die vorliegende Erfindung wird entsprechend bezüglich einem allgemein üblichen Arbeitsbetrieb mit Kreiseldrehung im Gegenuhrzeigersinn und einem Linksversatz der hinteren Kreiseleinheit zur Ablage eines einzigen Seitenschwads beschrieben und somit zur Spurkorrektur der hinteren Kreiseleinheit bei Linkskurven. Prinzipiell wäre jedoch eine diesbezüglich vollständig in der Längsrichtung gespiegelte Spurkorrektur denkbar. Unabhängig davon liegt der abgelegte Seitenschwad bezüglich der Kurvenrichtung auf der Innenseite, ebenso ist die hintere Kreiseleinheit bezüglich der vorderen dann nach Innen hin versetzt. Bei Kreiseldrehrichtung im Uhrzeigersinn erfolgt die Steuerung spiegelbildlich und die Schwadablage auf der rechten Seite.

Vorzugsweise sind der Geberzylinder und der Zusatzlenkzylinder derart hydraulisch verschaltet, dass sie die Fahrspur der hinteren Kreiseleinheit bei deren Linksversatz bezüglich der vorderen Kreiseleinheit und bei Kurvenfahrten nach links automatisch in Abhängigkeit vom Nachlaufwinkel zur Kurvenaußenseite hin korrigieren. Das heißt, beispielsweise ein zwischen der Fahrtrichtung der hinteren Kreiseleinheit und der Längsachse des Längsträgers gebildeter Anlenkwinkel wird mittels der derartigen Überlappungssteuerung automatisch verkleinert, und der Kurvenradius der hinteren Kreiseleinheit wird vergrößert.

Dadurch lässt sich eine unvollständige Übergabe des Schwads von der vorderen Kreiseleinheit an die hintere Kreiseleinheit verhindern oder zumindest minimieren. Gleichzeitig kann die sich aus den Arbeitsbreiten der vorderen und hinteren Kreiseleinheiten jeweils zusammensetzende Gesamtarbeitsbreite des Seitenschwaders bei Kurvenfahrten automatisch maximiert werden.

Vorzugsweise sind der Hauptlenkzylinder und der Zusatzlenkzylinder hintereinanderliegend als Doppelzylinder ausgebildet. Dies ermöglicht eine besonders kompakte Anordnung zum Einstellen des Anlenkwinkels und vereinfacht zudem eine Installation des Hauptlenkzylinders und des Zusatzlenkzylinders beispielsweise als Ersatz für herkömmliche hydraulische Lenkzylinder ohne Überlappungssteuerung.

Der Haupt- und Zusatzlenkzylinder sind aus Sicherheitsgründen doppeltwirkend ausgeführt.

Vorzugsweise umfasst der Seitenschwader ferner schlepperseitig steuerbare Absperrorgane zur hydraulisch doppeltwirkenden Absperrung des Zusatzlenkzylinders. Dadurch lässt sich dieser beispielsweise für Transportfahrten ferngesteuert blockieren, ohne die Fahrt dafür unterbrechen zu müssen.

Vorzugsweise ist der Geberzylinder gleichlaufend ausgebildet, so dass er bei beidseitiger Druckgleichheit kräftefrei ist. Dies erleichtert das Abkoppeln des Seitenschwaders beispielsweise in dessen Geradeausstellung, indem Stellbewegungen des Geberzylinders beim Abkoppeln der Anhängevorrichtung bzw. Anhängeschiene vom Schlepper vermieden werden.

Bei einer günstigen Ausgestaltung ist der Geberzylinder als Gleichlaufzylinder mit ringflächenseitigen Steuerleitungen ausgebildet. Derartige Gleichlaufzylinder sind handelsüblich und daher vergleichsweise kostengünstig verfügbar.

Alternativ kann der Geberzylinder als Differenzialzylinder bestehend aus zwei ringflächenseitig starr verbundenen einfach wirkenden Zylindern mit identischer Kolbenfläche und kolbenflächenseitigen Steuerleitungen ausgebildet sein. Auch dies ermöglicht einen vorteilhaften kräftefreien Betrieb bei Druckgleichheit.

Vorzugsweise umfasst der Seitenschwader ferner maschinell gesteuerte Absperrorgane, die geöffnet den Geberzylinder beidseitig mit einer hydraulischen Druckleitung verbinden und somit an ein gemeinsames Druckniveau anschließen. Dadurch lässt sich die beidseitige Druckgleichheit einfach und automatisch herstellen.

Bei einer alternativen Ausführungsform kann der Geberzylinder als Differenzialzylinder mit kolbenflächenseitiger Steuerleitung und mit ringflächenseitigen Steuerleitung ausgebildet sein. Es lassen sich somit auch herkömmliche Differenzialzylinder erfindungsgemäß einsetzen.

Vorzugsweise ist dem Geberzylinder dann wenigstens ein maschinell gesteuertes Absperrorgan zum Absperren wenigstens einer der Steuerleitungen, insbesondere der ringflächenseitigen Steuerleitung, zugeordnet. Auch damit lässt sich gegebenenfalls vermeiden, dass der Geberzylinder beim Abkoppeln des Seitenschwaders so stark druckbelastet ist, dass übermäßige Stellbewegungen der Anhängevorrichtung verursacht werden.

Vorzugsweise umfasst der Seitenschwader ferner eine gemeinsam auf den Hauptlenkzylinder und den Zusatzlenkzylinder wirkende mechanische Hubbegrenzung mit wenigstens einem Hubbereich, der den Anlenkwinkel auf einen Bereich für Linksversatz der hinteren Kreiseleinheit bis hin zu mittig nachlaufender Kreiseleinheit begrenzt. Damit lässt sich die beabsichtigte Überlappungssteuerung gezielt auf Arbeitsfahrten mit Linkskurven bei Linksversatz begrenzen.

Vorzugsweise umfasst die Hubbegrenzung eine Langlochkoppel, ein darin geführtes und mit dem Fahrwerk der hinteren Kreiseleinheit anlenkend verbundenes Steuerelement und einen insbesondere mittels Feder einrastenden Vorwahlhebel, der die Bewegung des Steuerelements wahlweise über die gesamte Langlochkoppel ermöglicht oder jeweils einseitig für Linksversatz oder Rechtsversatz der hinteren Kreiseleinheit jeweils im Wesentlichen bis zur Langlochmitte begrenzt.

Bevorzugte Ausführungsformen der Erfindung sind zeichnerisch dargestellt. Es zeigen:
- Fig. 1: eine schematische Draufsicht auf den Kreiselschwader bei Linkskurvenfahrt;
- Fig. 2A, 2B: eine Draufsicht auf eine konstruktive Ausgestaltung des Kreiselschwaders in Geradeausstellung und eine Detailansicht;
- Fig. 3A: eine Explosionszeichnung der mechanischen Hubbegrenzung;
- Fig. 3B: beispielhafte Schaltstellungen der mechanischen Hubbegrenzung;
- Fig. 4A-4E: schematische Darstellungen mechanischer und hydraulischen Komponenten der Überlappungssteuerung gemäß einer ersten Ausführungsform und deren Arbeitsweise bei Transportfahrten und in Arbeitsstellung;
- Fig. 5A, 5B: hydraulische Schaltbilder einer zweiten Ausführungsform der Überlappungssteuerung bei Geradeausfahrt und bei Linkskurven in Arbeitsstellung; und
- Fig. 6A, 6B: hydraulische Schaltbilder einer dritten Ausführungsform der Überlappungssteuerung in Arbeitsstellung bei Linkskurven und bei einer Vorgewende-/ Transportfahrt.

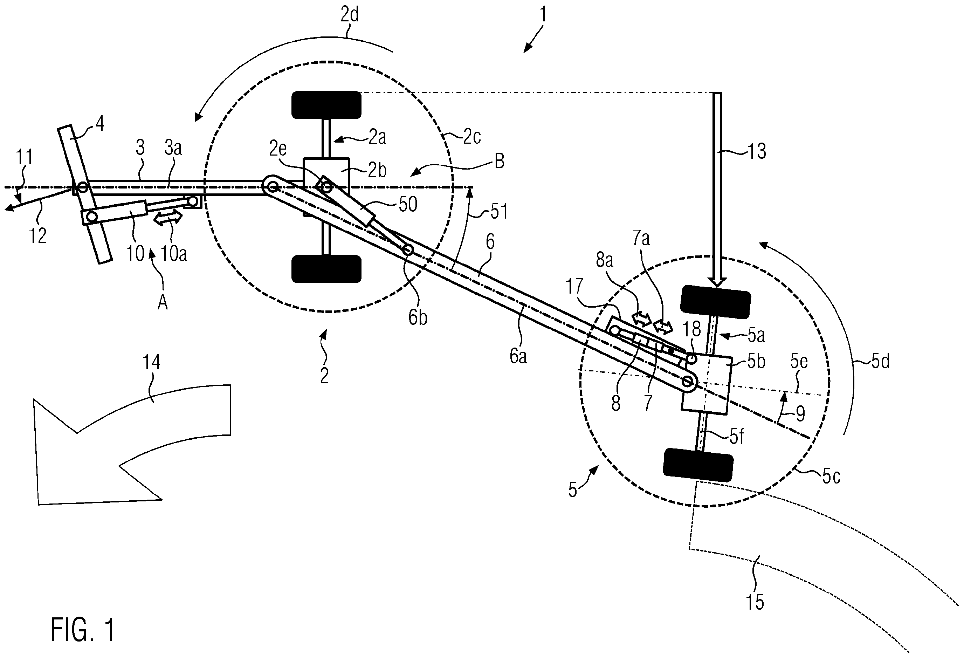

Wie die Fig. 1 erkennen lässt, ist der gezogene Seitenschwader 1, der Einfachheit halber hier auch nur als Seitenschwader 1 bezeichnet, im einfachsten Fall als Zweikreisel-Seitenschwader ausgebildet. Der Seitenschwader 1 umfasst eine vordere Kreiseleinheit 2 mit einem Fahrwerk 2a, einer Kreiselaufnahme 2b und einem sich darauf drehenden Rechenkreisel 2c mit Drehrichtung 2d im Gegenuhrzeigersinn.

Der vorderen Kreiseleinheit 2 ist eine auf prinzipiell bekannte Weise in seitlicher Richtung starr angekoppelter Zugdeichsel 3 zugeordnet, an der eine Anhängevorrichtung 4 beispielsweise in Form einer Anhängeschiene seitlich schwenkbar angelenkt ist. Die Anhängevorrichtung 4 kann auf prinzipiell bekannte Weise starr an einen Schlepper gekoppelt werden, beispielsweise indem sie an den Unterlenkern einer Dreipunktbefestigung des Schleppers verankert wird.

Der gezogene Seitenschwader 1 umfasst wenigstens eine hintere Kreiseleinheit 5 mit einem Fahrwerk 5a, einer zugehörigen Kreiselaufnahme 5b und einem Rechenkreisel 5c mit Drehrichtung 5d im Gegenuhrzeigersinn.

Die vordere und hintere Kreiseleinheit 2, 5 sind durch einen Längsträger 6 seitlich schwenkbar aneinander angelenkt. Das heißt, die vordere Kreiseleinheit 2 zieht die hintere Kreiseleinheit 5 mittels des Längsträgers 6 im Fahrbetrieb hinter sich her.

Der Seitenschwader 1 umfasst ferner einen hydraulischen Hauptlenkzylinder 7 mit einem ersten Stellbereich 7a und einen hydraulischen Zusatzlenkzylinder 8 mit einem zweiten Stellbereich 8a, der parallel zum ersten Stellbereich 7a verläuft / ausgerichtet ist.

Der Hauptlenkzylinder 7 und der Zusatzlenkzylinder 8 sind somit funktional in Reihe angeordnet und dabei parallel zueinander und insbesondere koaxial zueinander ausgerichtet. Eine koaxiale Anordnung kann vorteilhaft in Form eines Doppelzylinders realisiert werden.

Im Beispiel addieren sich der erste und zweite Stellbereich 7a, 8a, so dass mit dem Hauptlenkzylinder 7 und dem Zusatzlenkzylinder 8 in Summe ein Anlenkwinkel 9 eingestellt werden kann, der zwischen dem Längsträger 6 und dem Fahrwerk 5a der hinteren Kreiseleinheit 5 ausgebildet ist, hier beispielsweise definitionsgemäß zwischen der Längsachse 6a des Längsträgers 6 und der jeweiligen Fahrtrichtung 5e der hinteren Kreiseleinheit 5. Der Anlenkwinkel 9 könnte aber stattdessen auch zwischen der Längsachse 6a und der Achsrichtung 5f des hinteren Fahrwerks 5a definiert sein.

Der Hauptlenkzylinder 7 wird hierzu auf prinzipiell bekannte Weise schlepperseitig gesteuert. Der daraus resultierende Anteil des Anlenkwinkels 9 und die zugehörige Steuerung werden daher nachfolgend nicht weiter thematisiert. Vielmehr wird auf den durch erfindungsgemäße Steuerung des Zusatzlenkzylinders 8 erzeugten Anteil des Anlenkwinkels 9 bzw. die dadurch bewirkte Spurkorrektur der hinteren Kreiseleinheit eingegangen.

Gemäß einer ersten Anordnungsvariante A ist dem Zusatzlenkzylinder 8 ein diesen betätigender Geberzylinder 10 zugeordnet, dessen eines Ende an der Zugdeichsel 3 und dessen anderes Ende an der Anhängevorrichtung 4 jeweils seitlich schwenkbar angelenkt ist. Bei Veränderung eines zwischen der Zugdeichsel 3 und der Anhängevorrichtung 4 gebildeten seitlichen Nachlaufwinkels 11 wird der Geberzylinder 10 entweder eingefahren oder ausgefahren, wodurch er den Zusatzlenkzylinder 8 hydraulisch betätigt. Die durch Veränderung des Nachlaufwinkels 11 erzeugte Stellbewegung 10a des Geberzylinders 10 ist in der Fig. 1 schematisch angedeutet.

Der Nachlaufwinkel 11 ist vorzugsweise zwischen der Längsachse 3a der Zugdeichsel 3 und der Zugrichtung 12 (hier orthogonal zu der in Querrichtung angekoppelten Anhängevorrichtung 4) definiert. Die Anhängevorrichtung 4 ist vorzugsweise eine in bekannter Weise an den Unterlenkern einer Dreipunktaufhängung verankerbare Anhängeschiene. Die Zugdeichsel 3 ist daran zentral und insbesondere mittig angelenkt, der Geberzylinder 10 diesbezüglich seitlich versetzt, vorzugsweise nach links versetzt, wie in der Fig. 1 jeweils zu erkennen ist.

Gemäß einer zweiten, alternativen Anordnungsvariante B ist dem Zusatzlenkzylinder 8 ein diesen betätigender Geberzylinder 50 zugeordnet, dessen eines Ende an einem Lagerpunkt 2e auf der vorderen Kreiselaufnahme 2b und dessen anderes Ende an einem Lagerpunkt 6b unter dem Längsträger 6 jeweils seitlich schwenkbar angelenkt ist. Bei Veränderung eines zwischen der vorderen Kreiselaufnahme 2b und dem Längsträger 6 gebildeten seitlichen Nachlaufwinkels 51 wird der Geberzylinder 50 entweder eingefahren oder ausgefahren, wodurch er den Zusatzlenkzylinder 8 hydraulisch betätigt.

Der Nachlaufwinkel 51 ist vorzugsweise zwischen der Längsachse 3a der Zugdeichsel 3 und der Längsachse 6a des Längsträgers 6 definiert. Die Lagerpunkte 2e und 6b befinden sich dann vorzugsweise auf diesen Längsachsen 3a, 6a.

Die Lagerpunkte 2e und 6b sind ortsfest bezüglich der Kreiselaufnahme 2b und des Längsträgers 6. Dies steht im Gegensatz zu an Steuerkurven geführten (nicht ortsfesten) Lagerpunkten und ermöglicht demgegenüber beispielsweise eine vereinfachte Konstruktion und ggf. Nachrüstung der Überlappungssteuerung (mit Spurkorrektur).

In der Fig. 1 sind die alternativen Anordnungsvarianten A, B der Einfachheit halber gemeinsam dargestellt.

Der Geberzylinder 10, 50 und der Zusatzlenkzylinder 8 sind beispielsweise gemäß einer der nachfolgend beschrieben Varianten hydraulisch verschaltet, wodurch sie die Fahrspur der hinteren Kreiseleinheit 5 bei deren Linksversatz 13 bezüglich der vorderen Kreiseleinheit 2 und bei Kurvenfahrten 14 nach links automatisch zur Kurvenaußenseite hin in Abhängigkeit vom jeweiligen Nachlaufwinkel 11 korrigieren.

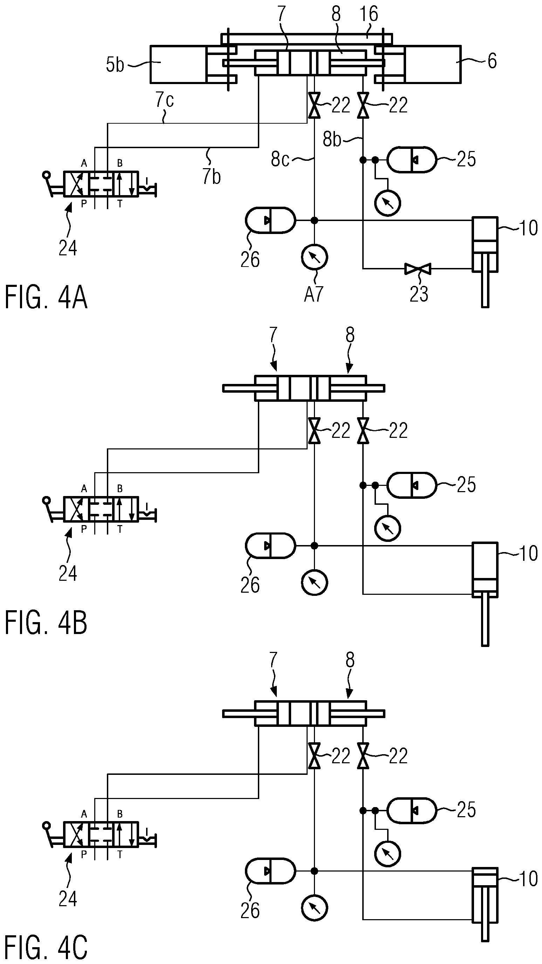

Der Einfachheit halber steht das Bezugszeichen 10 in den Fig. 4A bis 4E auch für den Geberzylinder 50 gemäß der Anordnungsvariante B.

Dies bewirkt, dass vom Rechenkreisel 2c der vorderen Kreiseleinheit 2 aufgenommenes Mähgut effektiv an den Rechenkreisel 5c der hinteren Kreiseleinheit 5 übergeben und als gemeinsamer Seitenschwad 15 abgelegt wird, der in der Fig. 1 schematisch angedeutet ist.

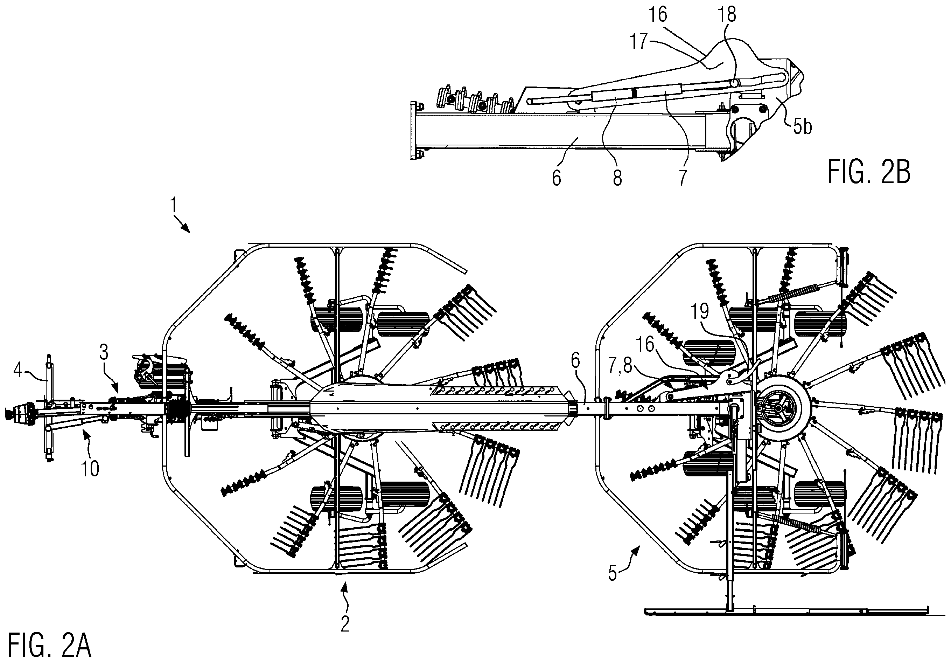

Die Fig. 2A zeigt eine konkrete Ausgestaltung des in der Fig. 1 schematisch dargestellten Seitenschwaders 1 (der Übersichtlichkeit halber hier nur gemäß der Anordnungsvariante A) zusätzlich mit einer mechanischen Hubbegrenzung 16, die gemeinsam auf den Hauptlenkzylinder 7 und den Zusatzlenkzylinder 8 wirkt, um den Anlenkwinkel 9 für bestimmte Fahrsituationen des Seitenschwaders 1 mechanisch zu begrenzen.

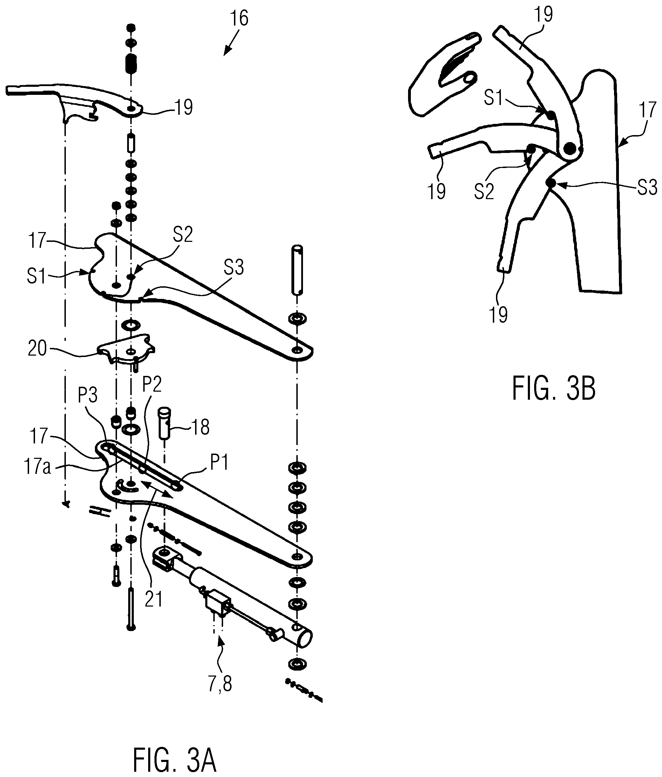

Wie hierzu in den Fig. 2B und 3B zu erkennen ist, umfasst die mechanische Hubbegrenzung 16 eine Langlochkoppel 17, ein darin geführtes und mit dem Fahrwerk 5a bzw. der Kreiselaufnahme 5b der hinteren Kreiseleinheit 5 lenkend verbundenes Steuerelement 18 und einen vorzugsweise federnd vorgespannten Vorwahlhebel 19, der beispielsweise mittels eines Verriegelungselements 20 eine von drei Schaltstellungen S1, S2 und S3 einrastend einnimmt. Das Steuerelement 18 ist zum besseren Verständnis in vereinfachter Anordnung auch in der Fig. 1 angedeutet.

Demnach sind entlang des in der Langlochkoppel 17 ausgebildeten Langlochs 17a drei Positionen P1, P2, P3 definiert, wobei die im Wesentlichen mittige Position P2 einer fluchtenden Geradeausstellung der vorderen und hinteren Kreiseleinheit 2, 5 zueinander entspricht, die Position P1 einem Linksversatz der hinteren Kreiseleinheit 5 zur Erzeugung des gemeinsamen Seitenschwads 15 der Kreiseleinheiten 2, 5 und P3 einem Rechtsversatz der hinteren Kreiseleinheit 5 zur Erzeugung zweier Einzelschwade mit je einer der Kreiseleinheiten 2, 5.

Die Funktionsweise der mechanischen Hubbegrenzung 16 ist derart, dass die Stellung S1 ein Verschwenken der hinteren Kreiseleinheit 5 von P2 bis P3 und somit nur nach rechts ermöglicht, um durch Rechtsversatz der hinteren Kreiseleinheit 5 zwei Einzelschwade abzulegen.

In der Stellung S2 kann die hintere Kreiseleinheit 5 von P1 bis P3 und somit vollständig von rechts nach links bzw. entgegengesetzt durchgeschwenkt werden, was zum Rückwärtssetzen vorteilhaft ist und Lenkmanöver insgesamt erleichtert.

In der Stellung S3 kann die hintere Kreiseleinheit 5 nur nach links verschwenkt werden, um bei entsprechendem Linksversatz einen einzigen, gemeinsamen Seitenschwad 15 abzulegen. Dabei wird die Räumbreite beider Kreiseleinheiten 2, 5 für die Ablage des gemeinsamen Seitenschwads 15 zusammengeführt.

In der Stellung S3 können der Haupt- und der Zusatzlenkzylinder 7, 8 nur zwischen den Positionen P1 (Seitenschwad) und P2 (fluchtende Geradeausstellung) bewegt werden, also in einem dafür vorgesehenen Stellbereich 21 des Steuerelements 18 in der Langlochkoppel 17.

Somit ermöglichen die Stellungen S1, S2, S3, die Bewegung des Steuerelements 18 wahlweise über die gesamte Langlochkoppel 17 bzw. deren Langloch 17a oder jeweils nur einseitig für Linksversatz oder Rechtsversatz der hinteren Kreiseleinheit 5 jeweils im Wesentlichen bis zur Langlochmitte bzw. der Position P2.

Insbesondere die Stellung S3 ermöglicht eine Stellungssicherung der hinteren Kreiseleinheit 5 in Kombination mit der beschriebenen Überlappungssteuerung.

Die mechanische Hubbegrenzung 16 lässt sich ebenso mit der Anordnungsvariante B in vorteilhafter Weise kombinieren.

Die Fig. 4A zeigt schematisch das prinzipielle Zusammenwirken mechanischer und hydraulischer Komponenten zur Überlappungssteuerung der hinteren Kreiseleinheit 5.

Demnach ist der Hauptlenkzylinder 7 an der hinteren Kreiseleinheit 5 angelenkt, hier an der mit dessen Fahrwerk 5a verbundenen Kreiselaufnahme 5b. Der Zusatzlenkzylinder 8 ist am Längsträger 6 angelenkt. Der Gesamtstellbereich des Hauptlenkzylinders 7 und des Zusatzlenkzylinders 8 und damit die jeweils möglichen Anlenkwinkel 9 werden durch die mechanische Hubbegrenzung 16 (je nach Stellung des Vorwahlhebels 19) festgelegt.

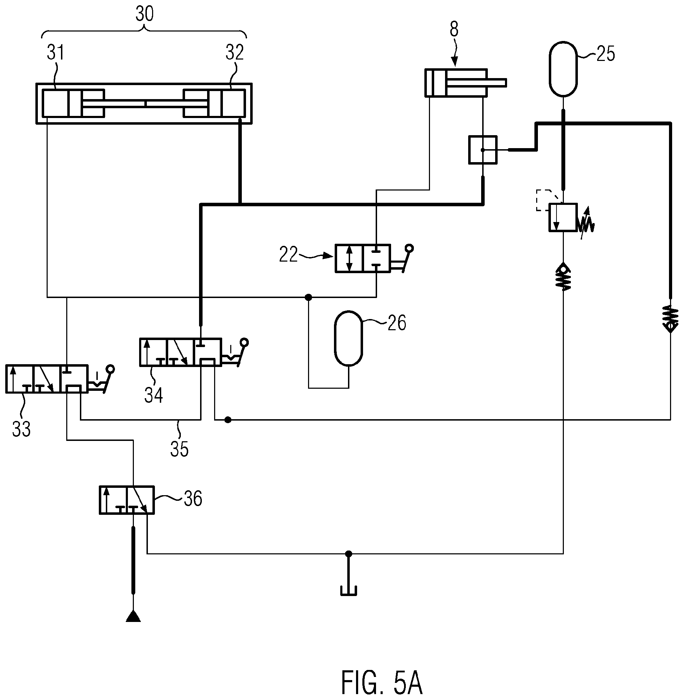

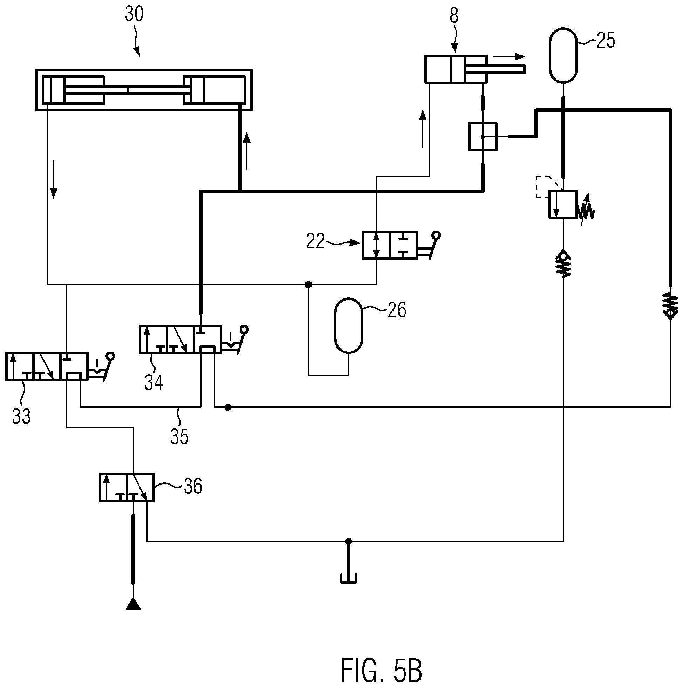

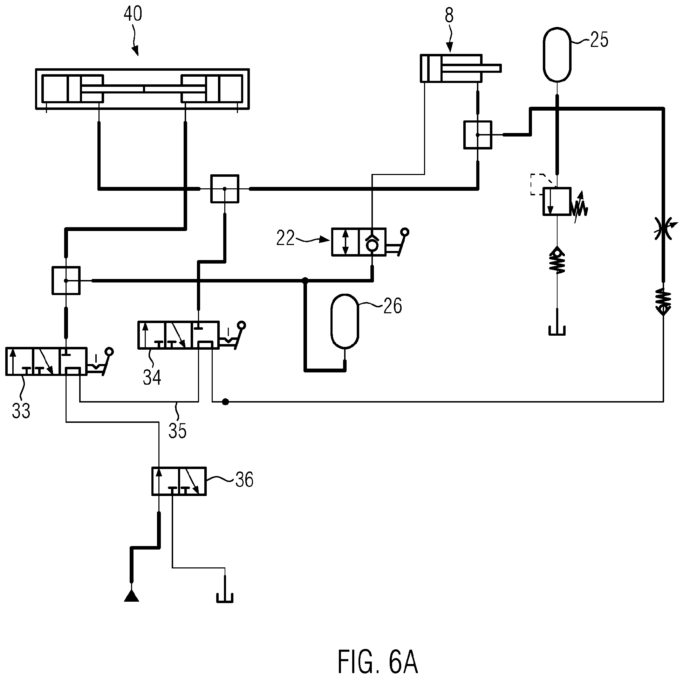

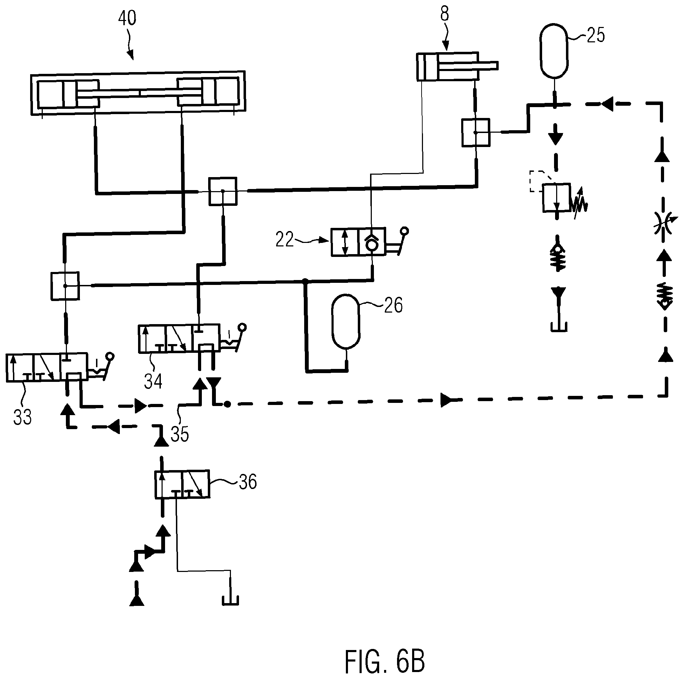

Während diese mechanische Anordnung im Wesentlichen bei allen nachfolgend beschriebenen Varianten der Überlappungssteuerung verwendet werden kann, betreffen die Fig. 4A bis 4E eine erste Ausführungsform der hydraulischen Schaltung, die Fig. 5A und 5B eine zweite und die Fig. 6A und 6B eine dritte Ausführungsform der hydraulischen Schaltung.

In der Fig. 4A sind ferner die ringflächenseitige Steuerleitung 7b und die kolbenflächenseitige Steuerleitung 7c des Hauptlenkzylinders 7 sowie die ringflächenseitige Steuerleitung 8b und die kolbenflächenseitige Steuerleitung 8c des Zusatzlenkzylinders 8 zu erkennen, in denen jeweils ein Absperrorgan 22 vorhanden ist, hier in Form schlepperseitig steuerbarer Ventile.

Die ringflächenseitige Steuerleitung 8b ist an die Ringflächenseite des Geberzylinders 10 angeschlossen, wobei dieser davon durch ein optionales Absperrorgan 23, hier wiederum in Form eines schlepperseitig steuerbaren Ventils, abgetrennt werden könnte. Die ringflächenseitige Steuerleitung 8b ist ferner an eine erste Speicherblase 25 angeschlossen.

Die kolbenflächenseitige Steuerleitung 8c ist an die Kolbenflächenseite des Geberzylinders 10 und an eine zweite Speicherblase 26 angeschlossen. Auch diese Verbindung könnte am Geberzylinder 10 durch ein entsprechendes Absperrorgan 23 (nicht gezeigt) beispielsweise schlepperseitig gesteuert abgetrennt werden.

Das Bezugszeichen 24 bezeichnet ein prinzipiell bekanntes schlepperseitiges Steuergerät zum Umschwenken von einer Transportstellung in eine Arbeitsstellung.

Die oben genannten Bezugszeichen werden teilweise auch in den nachfolgend beschriebenen Figuren soweit zutreffend verwendet und daher nicht nochmals erklärt.

Während die Fig. 4A einen Betriebszustand des Seitenschwaders 1 bei Geradeausfahrt in einer Transportstellung zeigt, verdeutlicht die Fig. 4B die Stellungen des Hauptlenkzylinders 7, des Zusatzlenkzylinders 8 und des Geberzylinders 10 beispielhaft für eine Transportfahrt bei einer Rechtskurve. Demnach ist der Geberzylinder 10 (infolge des verursachten Nachlaufwinkels 11) dabei ausgefahren. Die Absperrorgane 22 sind infolge schlepperseitiger Steuerung geschlossen, und/oder die mechanische Hubbegrenzung 16 ist auf den Langlochbereich P1 bis P2 eingestellt. Hydrauliköl wird dann aus der Ringflächenseite des Geberzylinders 10 in die erste Speicherblase 25 verdrängt, und die zweite Speicherblase 26 speist die Kolbenflächenseite des Geberzylinders 10 mit Hydrauliköl. Die Stellung des Hauptlenkzylinders 7 bleibt unverändert.

In der Fig. 4C ist auf entsprechende Weise ein Zustand bei einer Transportfahrt während einer Linkskurve dargestellt. Der Geberzylinder 10 ist (infolge des verursachten Nachlaufwinkels 11) dabei eingefahren. Die Absperrorgane 22 sind infolge schlepperseitiger Steuerung geschlossen, und/oder die mechanische Hubbegrenzung 16 ist auf den Langlochbereich P1 bis P2 eingestellt. Hydrauliköl wird dann aus der Kolbenflächenseite des Geberzylinders 10 in die zweite Speicherblase 26 verdrängt, und die erste Speicherblase 25 speist die Ringflächenseite des Geberzylinders 10 mit Hydrauliköl. Die Stellung des Hauptlenkzylinders 7 bleibt unverändert.

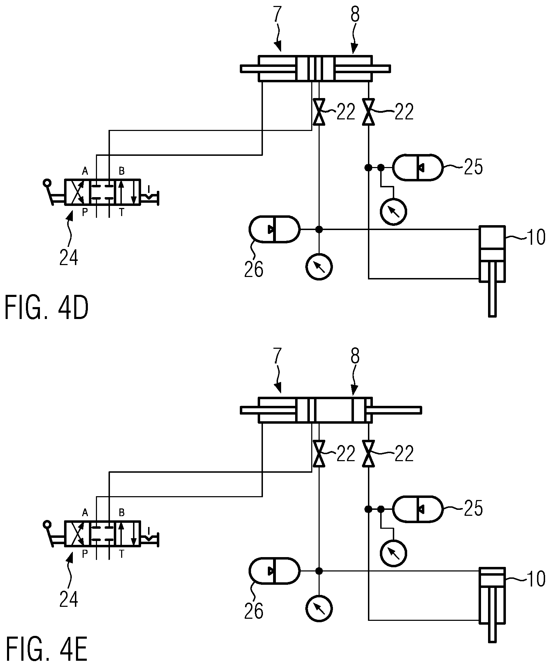

In der Fig. 4D ist auf entsprechende Weise ein Zustand bei Geradeausfahrt in Arbeitsstellung mit Linksversatz dargestellt. Hierfür wird die Ringflächenseite des Hauptlenkzylinders 7 schlepperseitig hydraulisch gesteuert. Dieser fährt demzufolge bis zum Langlochpunkt P1 ein, sodass die hintere Kreiseleinheit 5 auf einen Anlenkwinkel 9 aus der Geradeausfahrt verschwenkt wird, wobei die hintere Kreiseleinheit 5 mit einem geeigneten Linksversatz hinter der vorderen Kreiseleinheit 5 läuft, das Mähgut von dieser im Wesentlichen vollständig übernimmt und als Seitenschwad 15 ablegt (siehe auch Fig. 1 und 3A).

In der Fig. 4E ist eine entsprechende Linkskurvenfahrt in Arbeitsstellung dargestellt. In diesem Fall speist der Geberzylinder 10 Hydrauliköl zur Kolbenflächenseite des Zusatzlenkzylinders 8, der demzufolge im Langlochbereich P1 bis P2 ausfährt und die hintere Kreiseleinheit 5 auf einen vom Nachlaufwinkel 11 abhängigen Anlenkwinkel 9 für Linkskurvenfahrt verschwenkt (welcher hier definitionsgemäß größer ist als bei Geradeausfahrt, jedoch kleiner als in Fig. 4D beschrieben). Dadurch wird die Überlappung der vorderen und der hinteren Kreiseleinheit 2, 5 zueinander derart gesteuert und vergrößert, dass zwischen der vorderen und hinteren Kreiseleinheit 2, 5 im Wesentlichen kein Mähgut liegen bleibt (siehe auch Fig. 1 und 3A).

Die Fig. 5A, 5B, 6A und 6B zeigen Hydraulikvarianten mit je einem gleichlaufend arbeitenden Geberzylinder 30, 40, der hinsichtlich der Lenkkorrekturfunktion dem Geberzylinder 10 oder 50 entspricht. Damit wird jeweils bewirkt, dass beiden Seiten des Geberzylinders 30, 40 auf ein im Wesentlichen gleiches Druckniveau gebracht werden können und der Geberzylinder 30, 40 dann kräftefrei ist. Folglich kann beim Abkoppeln des Seitenschwaders 1 vom zugehörigen Schlepper eine einseitige Druckbeaufschlagung des jeweiligen Geberzylinders 30, 40 und damit eine unkontrollierte bzw. prinzipiell unerwünschte Stellbewegung an der Anhängevorrichtung 4 vermieden werden.

Demnach zeigen die Fig. 5A und 5B eine zweite Ausführungsform der Hydraulik, bei welcher der Geberzylinder 30 als Differenzialzylinder bestehend aus zwei ringflächenseitig (hier mittels einer Kolbenstange) starr verbundenen einfachwirkenden Zylindern 31, 32 mit identischer Kolbenfläche und zwei kolbenflächenseitigen Steuerleitungen ausgebildet ist.

Hierbei zeigt die Fig. 5A einen Zustand bei Geradeausfahrt in Arbeitsstellung. In diesem Fall liegt an der ersten Speicherblase 25 ein vergleichsweise größerer Druck an, der (mit dem Ringflächenverhältnis multipliziert) bewirkt, dass der Zusatzlenkzylinder 8 eingefahren bleibt. Das Ventil 22 ist in diesem Zustand geöffnet und erlaubt so bei Linkskurven Stellbewegungen am Zusatzlenkzylinder 8.

Aufgrund des identischen Querschnitts beider Kolbenflächenseiten ist der Geberzylinder 30 bei Druckgleichheit kräftefrei, wofür zugeordneten Absperrorgane 33, 34, vorzugsweise schlepperseitig steuerbare Ventile, geöffnet werden und den Geberzylinder 30 dadurch beidseitig an eine Druckleitung 35 und somit an das selbe Druckniveau anschließen.

Gezeigt ist ferner ein einfachwirkendes Ventil 36, das schlepperseitig betätigt wird, um die Fahrwerke 2a, 5a beider Kreiseleinheiten 2, 5 anzuheben. Der Hauptlenkzylinder 7 ist hier, wie auch nachfolgend, der Übersichtlichkeit halber weggelassen.

Die Fig. 5B zeigt einen Zustand bei Linkskurvenfahrt in Arbeitsstellung. Dabei wird der Geberzylinder 30 zwischen Zugdeichsel 3 und Anhängevorrichtung 4 (hier nicht dargestellt) eingefahren. Der Druck an der zweiten Speicherblase 26 steigt dadurch an und fällt demgegenüber an der ersten Speicherblase 25 ab. Der Zusatzlenkzylinder 8 fährt demzufolge aus und bewirkt eine gewünschte Lenkkorrektur (Spurkorrektur) der Überlappungssteuerung der hinteren Kreiseleinheit 5.

Die Fig. 6A und 6B zeigen eine dritte Ausführungsform der Hydraulik, wobei der Geberzylinder 40 als Gleichlaufzylinder mit Steuerleitungen an beiden Ringflächenseiten ausgebildet ist und in Geradeausfahrt ausgerichtet ist.

Auf entsprechende Weise ist der Geberzylinder 40 hier bei einem in der Fig. 6A dargestellten Zustand während einer Linkskurvenfahrt in Arbeitsstellung eingefahren und bewirkt ebenso die zuvor beschriebene Lenkkorrektur.

Demgegenüber zeigt die Fig. 6B einen Zustand bei einer Vorgewende- oder Transportfahrt. Zum Anheben der Fahrwerke 2a, 5a beider Kreiseleinheiten 2, 5 wird das Ventil 36 schlepperseitig betätigt und demzufolge der Zusatzlenkzylinder 8 über die Druckleitung 35 vollständig eingefahren. Das aus seiner Kolbenflächenseite verdrängte Öl wird durch ein Absperrorgan 22, beispielsweise ein weiteres Ventil, in die zweite Speicherblase 26 abgeleitet, wobei das Absperrorgan 22 hier auch hydraulisch angesteuert sein könnte. Somit wird die Überlappungssteuerung blockiert, und ungewollte Lenkbewegungen werden vermieden.

Außerdem ermöglicht die in Fig. 6A und 6B gezeigte Schaltung die automatische Befüllung des Systems und den Ausgleich von Lecköl, um zu jeder Zeit sichere Fahrzustände zu gewährleiten.

Die Erfindung ist bezüglich der bevorzugten Anwendung an einem Seitenschwader 1 mit zwei Kreiseleinheiten 2, 5 beschrieben. Die Überlappungssteuerung der hinteren Kreiseleinheit 5 ist aber prinzipiell auch auf wenigstens eine weitere, entsprechend nachfolgend angelenkte Kreiseleinheit übertragbar. Jede weitere Kreiseleinheit würde hierfür einen Hauptlenkzylinder 7 und einen Zusatzlenkzylinder 8 und optional eine mechanische Hubbegrenzung 16 benötigen und könnte dann auf die gleiche Weise, wie für die hintere Kreiseleinheit 5 beschrieben ist, ebenso vom an der Zugdeichsel 3 und der Anhängevorrichtung 4 angelenkten Geberzylinder 10 automatisch in Abhängigkeit vom Nachlaufwinkel 11 gesteuert werden.

## Patentansprüche

1. Gezogener Seitenschwader (1), insbesondere Zweikreisel-Seitenschwader, umfassend: eine vordere Kreiseleinheit (2) mit einer Zugdeichsel (3) und einer an dieser angelenkten und starr an einen Schlepper koppelbaren Anhängevorrichtung (4); eine hintere Kreiseleinheit (5); einen an die vordere und hintere Kreiseleinheit angelenkten Längsträger (6); einen hydraulischen Hauptlenkzylinder (7) mit einem ersten Stellbereich (7a) und einen hydraulischen Zusatzlenkzylinder (8) mit einem zweiten Stellbereich (8a), der parallel zum ersten Stellbereich (7a) verläuft, wobei der Hauptlenkzylinder (7) und der Zusatzlenkzylinder (8) zum Einstellen eines Anlenkwinkels (9) zwischen dem Längsträger (6) und dem Fahrwerk (5a) der hinteren Kreiseleinheit (5) angeordnet sind; und einen Geberzylinder (10, 30, 40, 50) zum Betätigen des Zusatzlenkzylinders (8), wobei
A) der Geberzylinder (10, 30, 40) an der Zugdeichsel (3) einerseits und an der Anhängevorrichtung (4) andererseits derart angelenkt ist, dass der Geberzylinder (10, 30, 40) durch Veränderung eines zwischen der Anhängevorrichtung (4) und der Zugdeichsel (3) gebildeten Nachlaufwinkels (11) ein-/ ausgefahren wird, oder
B) der Geberzylinder (30, 40, 50) an einer Kreiselaufnahme (2b) der vorderen Kreiseleinheit (2) einerseits und am Längsträger (6) andererseits derart angelenkt ist, dass der Geberzylinder (30, 40, 50) durch Veränderung eines zwischen der vorderen Kreiselaufnahme (2b) und dem Längsträger (6) gebildeten Nachlaufwinkels (51) ein-/ ausgefahren wird.

2. Gezogener Seitenschwader nach Anspruch 1, wobei die Anhängevorrichtung (4) eine bezüglich Zugrichtung (12) des Schleppers quer an diesen ankoppelbare Anhängeschiene ist, an welche die Zugdeichsel (3) zentral, insbesondere mittig, und der Geberzylinder (10, 30, 40) diesbezüglich seitlich, insbesondere in Fahrtrichtung nach links versetzt, angelenkt sind.

3. Gezogener Seitenschwader nach Anspruch 1 oder 2, wobei der Geberzylinder (10, 30, 40, 50) und der Zusatzlenkzylinder (8) derart hydraulisch verschaltet sind, dass sie die Fahrspur der hinteren Kreiseleinheit (5) bei deren Linksversatz (13) bezüglich der vorderen Kreiseleinheit (2) und bei Kurvenfahrten (14) nach links automatisch zur Kurvenaußenseite hin in Abhängigkeit vom Nachlaufwinkel (11, 51) korrigieren.

4. Gezogener Seitenschwader nach wenigstens einem der vorigen Ansprüche, wobei der Hauptlenkzylinder (7) und der Zusatzlenkzylinder (8) hintereinanderliegend als Doppelzylinder ausgebildet sind.

5. Gezogener Seitenschwader nach wenigstens einem der vorigen Ansprüche, ferner umfassend wenigstens ein schlepperseitig steuerbares Absperrorgan (22), insbesondere zwei davon, zur hydraulisch doppeltwirkenden Absperrung des Zusatzlenkzylinders (8).

6. Gezogener Seitenschwader nach einem der vorigen Ansprüche, wobei der Geberzylinder (30, 40) gleichlaufend ausgebildet ist, sodass er bei beidseitiger Druckgleichheit kräftefrei ist.

7. Gezogener Seitenschwader nach einem der vorigen Ansprüche, wobei der Geberzylinder (40) als Gleichlaufzylinder mit ringflächenseitigen Steuerleitungen ausgebildet ist.

8. Gezogener Seitenschwader nach einem der Ansprüche 1 bis 6, wobei der Geberzylinder (30) als Differentialzylinder bestehend aus zwei ringflächenseitig starr verbundenen einfachwirkenden Zylindern (31, 32) mit identischer Kolbenfläche und kolbenflächenseitigen Steuerleitungen ausgebildet ist.

9. Gezogener Seitenschwader nach einem der vorigen Ansprüche 6 bis 8, ferner mit maschinell gesteuerten Absperrorganen (33, 34), die geöffnet den Geberzylinder (30, 40) beidseitig mit einer hydraulischen Druckleitung (35) verbinden und somit an ein gemeinsames Druckniveau anschließen.

10. Gezogener Seitenschwader nach einem der Ansprüche 1 bis 5, wobei der Geberzylinder (10) als Differentialzylinder mit kolbenflächenseitiger Steuerleitung und ringflächenseitiger Steuerleitung ausgebildet ist.

11. Gezogener Seitenschwader nach Anspruch 10, ferner mit wenigstens einem maschinell gesteuerten Absperrorgan (23) zum Absperren wenigstens einer der Steuerleitungen des Geberzylinders (10), insbesondere der ringflächenseitigen Steuerleitung.

12. Gezogener Seitenschwader nach wenigstens einem der vorigen Ansprüche, ferner umfassend eine gemeinsam auf den Hauptlenkzylinder (7) und den Zusatzlenkzylinder (8) wirkende mechanische Hubbegrenzung (16) mit wenigstens einem ersten Hubbereich, der den Anlenkwinkel (9) auf einen Stellbereich (21) für mittig nachlaufende hintere Kreiseleinheit (5) und deren Linksversatz begrenzt.

13. Gezogener Seitenschwader nach Anspruch 12, wobei die Hubbegrenzung (16) eine Langlochkoppel (17), ein darin geführtes und mit dem Fahrwerk (5a) der hinteren Kreiseleinheit (5) lenkend verbundenes Steuerelement (8) und einen insbesondere federnd einrastenden Vorwahlhebel (19) umfasst, der die Bewegung des Steuerelements wahlweise über die gesamte Langlochkoppel ermöglicht oder jeweils einseitig für Linksversatz oder Rechtsversatz der hinteren Kreiseleinheit jeweils im Wesentlichen bis zur Langlochmitte begrenzt.
